# FASCICULE DE BREVET EUROPEEN

(11) **EP 0 716 317 B1**
(45) Date de publication et mention de la délivrance du brevet: **04.07.2001**
(21) Numéro de dépôt: 95402669.6
(22) Date de dépôt: 27.11.1995
(51) Int. Cl.: G01S 13/90

(54) **Dispositif de détection et de localisation d'objets au sol**
Vorrichtung zum Entdecken und Orten von Bodenzielen
Device for the detection and location of ground objects

(30) Priorité: 07.12.1994 FR 9414721
(43) Date de publication de la demande: 12.06.1996
(73) Titulaire: THOMSON-CSF DETEXIS, société anonyne,, 78990 Elancourt (FR)
(72) Inventeur: Cessat, Pascal, F-92370 Chaville (FR)
(74) Mandataire: Plaçais, Jean-Yves

(56) Documents cités:
- DE-A- 4 304 027
- ELECTRONICS & COMMUNICATIONS IN JAPAN, PART I - COMMUNICATIONS, vol. 75, no. 3, Mars 1992 NEW YORK US, pages 85-93, XP 000308018 YAMAGUCHI ET AL. 'Detection of Objects by Synthetic Aperture FM-CW Radar'

## Description

L'invention se rapporte au domaine de la détection et de la localisation d'objets au sol.

Elle trouve une application particulière dans la détection et la localisation d'encombrements routiers, où des véhicules automobiles sont sensiblement immobiles sur une ou plusieurs voies d'une autoroute ou d'un carrefour.

Actuellement, on peut utiliser des caméras fonctionnant dans le visible ou l'infra-rouge, dont la portée est de 250 mètres environ. Toutefois, ces caméras sont indisponibles en cas d'intempéries, alors que précisément la probabilité d'incidents ou d'encombrements est la plus forte dans cette condition.

Par ailleurs, le recours au radar a jusqu'à présent été écarté, pour des raisons qui seront développées plus loin.

En reprenant l'analyse du problème, à savoir fournir un nouveau dispositif de détection et de localisation d'objets au sol qui soit de mise en oeuvre facile, simple et relativement peu onéreuse, tout en restant capable de fonctionner en cas d'intempéries, la Demanderesse a observé qu'une solution particulière fondée sur un radar pouvait néanmoins donner satisfaction.

Dans l'article "Electronics & Communications in Japan; Part I - Communications, vol 75, n° 3, Mars 1992, New-York US, pages 85-93; YAMAGUCHI et AL", il est décrit un émetteur/récepteur radar équipé d'au moins une antenne propre à engendrer un faisceau rayonnant déplacé parallèlement à lui-même sur un trajet essentiellement transverse par rapport à sa direction autour d'une position stationnaire par rapport au sol. Des moyens de traitement radar à ouverture synthétique traitent le signal de sortie du récepteur radar relatif au retour dudit faisceau sur ladite zone, en fonction du mouvement d'antenne, afin de détecter et localiser les objets au sol dans ladite zone délimitée.

Ce document décrit seulement des résultats d'une expérience menée pour détecter des objets placés à une distance très proche (par exemple 2 à 3 mètres) du radar à ouverture synthétique. Ce document ne décrit pas la détection d'objets tels que des véhicules éloignés d'une distance d'au moins 100 mètres par apport à l'antenne.

La présente invention part d'un dispositif du type radar SAR décrit dans l'article ci-avant et dans lequel, selon l'invention, le dispositif comprend une plate-forme horizontale propre à supporter l'ensemble constitué par l'émetteur/récepteur radar et l'antenne, ladite plate-forme étant montée autour d'un mât perpendiculaire au sol et disposé selon une relation géométrique prédéterminée par rapport à la zone délimitée, et l'antenne comprend une pluralité d'éléments rayonnants agencés en au moins une rangée disposée horizontalement sur la plate-forme, les éléments rayonnants étant disposés en sous-groupes pour rayonner selon la direction d'incidence du faisceau radar, et des moyens de commutation propres à commuter l'excitation de chaque sous-groupe d'éléments rayonnants de telle sorte que le centre de phase de l'antenne est mobile en translation linéaire par rapport au mât, selon une direction perpendiculaire à la direction d'incidence du faisceau radar et à une vitesse choisie.

Le dispositif selon l'invention a l'avantage de déplacer le faisceau radar selon une loi simple, dont la mise en oeuvre est obtenue par des moyens relativement simples et peu coûteux. De plus, la présente invention apporte une solution satisfaisante au problème de la détection et de la localisation d'objets au sol tels que des véhicules, et sur lequel on reviendra ci-après.

D'autres caractéristiques et avantages de l'invention apparaîtront à la lumière de la description détaillée et des dessins dans lesquels :

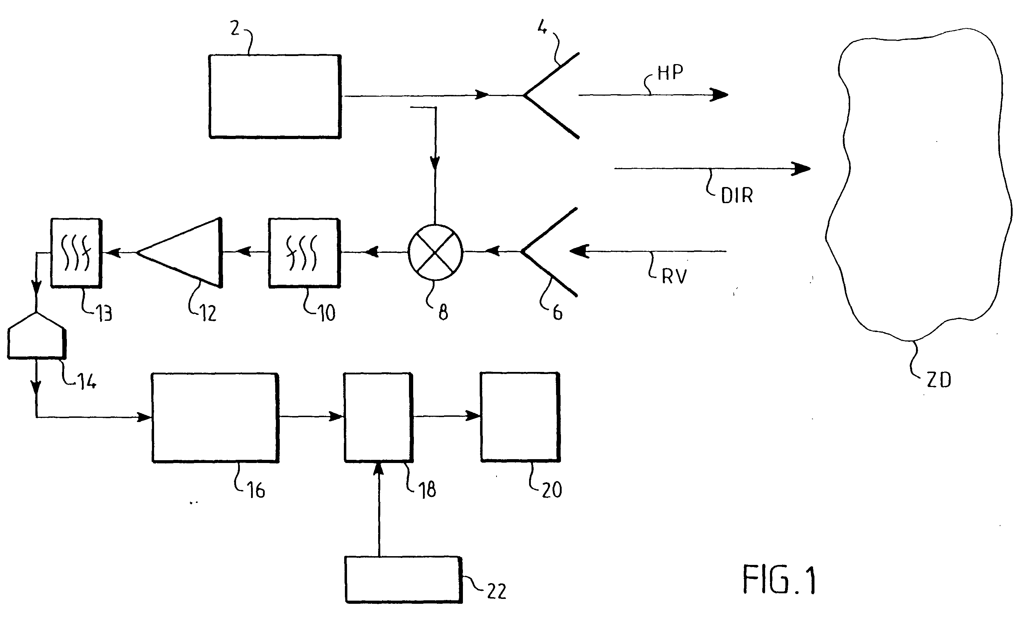

- la figure 1 est une représentation schématique des moyens essentiels du dispositif de détection et de localisation d'objets au sol selon l'invention ;

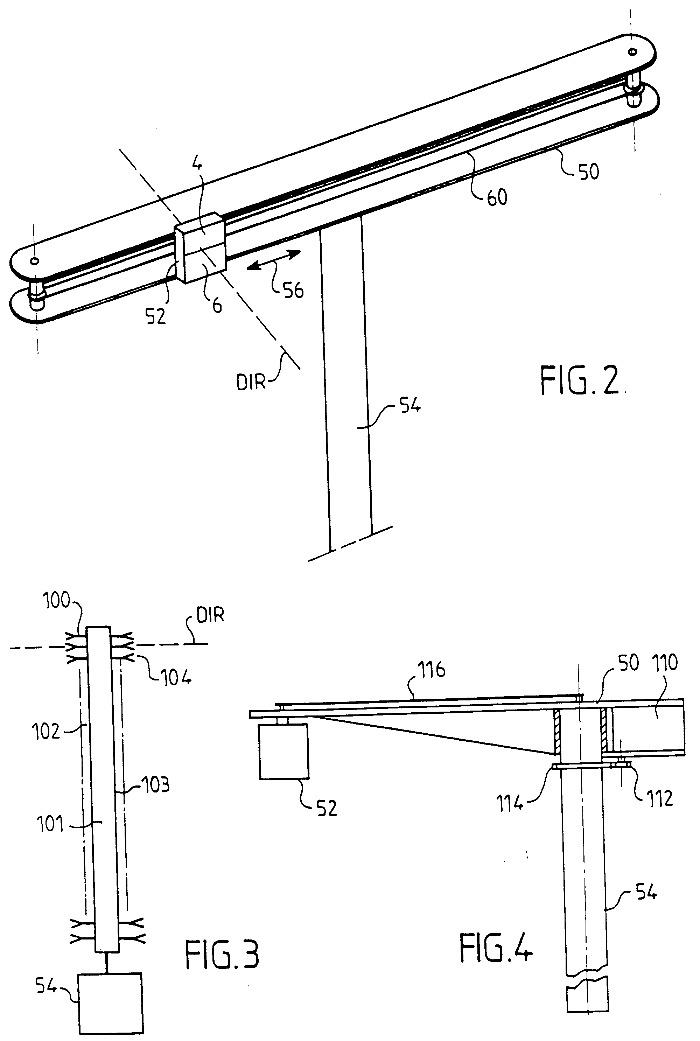

- la figure 2 est une représentation schématique du dispositif de détection et de localisation d'objets au sol dans lequel l'ensemble constitué par l'émetteur/récepteur radar et l'antenne est entraîné sur un rail de guidage rectiligne en circuit fermé selon une direction perpendiculaire à la direction du faisceau rayonnant selon l'invention ;
- la figure 3 est une vue de dessus du dispositif de détection et de localisation d'objets au sol dans lequel l'antenne est constituée d'une barrette d'éléments rayonnants excitables respectivement de telle sorte que le centre de phase de l'antenne est mobile en translation linéaire par rapport au mât, selon une direction perpendiculaire à la direction d'incidence du faisceau rayonnant et à une vitesse choisie selon l'invention ; et
- la figure 4 est une représentation schématique du dispositif de détection et de localisation d'objets au sol dans lequel les moyens de compensation angulaire asservissent le déplacement dudit ensemble de telle sorte que le faisceau rayonnant engendré par l'antenne reste en translation selon une direction perpendiculaire à la zone délimitée, lors de la rotation de ladite plate-forme.

On reviendra d'abord sur le problème posé.

Pour remplacer les caméras connues, on peut songer à un système radar, réputé moins sensible aux perturbations atmosphériques.

Le système, pour être opérant devrait permettre l'indication de la voie d'autoroute sur laquelle le trafic est perturbé. La largeur typique d'une telle voie est de 3,5 mètres. La résolution du radar doit être meilleure, soit par exemple 2,5 mètres, pour une portée égale ou supérieure à celle des caméras, que l'on peut fixer à 250 mètres.

Par ailleurs, l'ordre de grandeur de la résolution angulaire d'un radar compatible avec cette application avoisine le demi-degré.

On pense alors à un radar fonctionnant en bande millimétrique, par exemple 94 GHz, dont l'antenne mesure environ 40 cm pour une résolution angulaire du demi-degré. Mais, pour écarter le problème de la sensibilité aux intempéries, il faut atteindre une grande finesse de la cellule de résolution du radar (ouverture du faisceau en gisement x ouverture du faisceau en site x résolution en distance). Du fait de l'étendue de la zone à couvrir, il est alors nécessaire de prévoir un balayage en site et en gisement, ce qui aboutit à un système radar trop complexe et onéreux pour le but visé.

On sait aussi que les radars qui travaillent aux fréquences centimétriques fonctionnent bien dans des conditions météo difficiles (moindre sensibilité à la rétro-diffusion atmosphérique). Ils autorisent donc une ouverture en site qui permet d'illuminer la totalité de la zone à surveiller. Seul un balayage en gisement serait donc nécessaire. Mais, pour conserver la résolution désirée, la longueur d'antenne nécessaire est plus grande à proportion du rapport des longueurs d'onde. Se pose alors le problème de la distance minimale à laquelle on peut considérer que cette antenne fonctionne en champ lointain. Par exemple, pour une longueur d'onde radar de 3,3 cm, la longueur d'antenne vaut environ 4 m., et la distance minimale pour opérer en champ lointain est de 1000 m. Cette dernière distance est très supérieure à celle à laquelle on souhaite obtenir la résolution du demi-degré, dans l'application visée, d'où l'impossibilité de recourir à cette classe de radars.

On connaît par ailleurs les radars dits "à ouverture synthétique" (ou SAR pour "Synthetic Aperture Radar"), habituellement utilisés sur un mobile porteur distant tel qu'un avion ou un satellite. Ces radars atteignent une résolution angulaire très élevée (pour des points fixes) en emmagasinant et en intégrant les signaux revenus pendant leur déplacement, après correction de l'effet du mouvement du mobile porteur. Pour pouvoir les mettre en oeuvre, il faut d'abord très bien connaître le mouvement du mobile porteur, et surtout réaliser des traitements dont la complexité dépend notamment de la nature de la trajectoire du porteur, et du temps pendant lequel on souhaite réaliser l'intégration, paramètres dont dépend à son tour la résolution finalement obtenue.

Il serait donc théoriquement possible d'utiliser un tel radar pour surveiller la circulation routière. Mais la complexité et le coût d'un tel radar, et surtout le coût de la mise en oeuvre du porteur font que les hommes du métier n'ont pas songé jusqu'à présent à le mettre en oeuvre dans cette application.

En revanche, la Demanderesse a observé que, si le déplacement du faisceau radar obéit à une loi simple, telle qu'un déplacement parallèle à lui-même sur un trajet essentiellement transverse par rapport à sa direction autour d'une position stationnaire par rapport au sol, et proche de la zone à observer, le radar utilisé a de moindres besoins de performances en termes de stabilité à court terme, de temps d'analyse, et de puissance émise, ce qui ouvre certaines possibilités. En outre, elle a observé que cette loi peut être obtenue par des moyens mécaniques et/ou électroniques relativement simples et peu coûteux, que l'on peut mettre en oeuvre près de la zone observée, ce qui facilite l'obtention d'une résolution suffisante, et contribue encore à diminuer les coûts de mise en oeuvre du dispositif selon l'invention.

Sur la figure 1, le dispositif de détection et de localisation d'objets au sol, qui est placé sur la plate-forme que l'on décrira plus en détail ci-après, comprend tout d'abord un ensemble émetteur/récepteur radar.

L'émetteur comprend ici un ensemble générateur 2 de type FM/CW (onde continue modulée en fréquence, par exemple selon une rampe périodique) qui fournit le signal HP à une fréquence d'émission choisie, typiquement quelques GHz, pour une période de rampe de l'ordre de 140 *µ* s. Le signal d'émission HP est rayonné par une antenne 4 dédiée à l'émission et qui est dirigée selon une direction DIR appropriée vers la zone à observer ZD.

Le récepteur comprend ici une antenne 6 dédiée à la réception des signaux renvoyés RV (appelés encore signaux retour radar). L'antenne 6 est dirigée selon la direction DIR. Un mélangeur 8 mélange les signaux renvoyés RV et le signal d'émission HP (mélange homodyne). La chaîne de réception comprend ensuite un étage de filtrage 10, de type passe-haut, pour réjecter la composante continue du signal issu du mélangeur homodyne, un étage d'amplification 12 suivi d'un filtre passe bas 13 qui limite la plage distance observée, et enfin un étage de conversion analogique numérique 14.

Il est à remarquer que d'autres types d'émission, par exemple à impulsions, peuvent aussi convenir. Au lieu des antennes d'émission et réception séparées, on peut également utiliser une antenne unique et un duplexeur.

La suite relève du traitement radar à ouverture synthétique réalisé ici par une unité de traitement SAR 16.

Dès lors que l'on connaît bien le mouvement de l'antenne par rapport au sol (ou par rapport à un autre repère spatio-temporel de référence), il devient possible de corriger la suite des signaux de sortie du convertisseur 14, pour ne retenir que la contribution des points qui sont sensiblement fixes par rapport au sol (ou autre repère de référence).

Ces points ainsi retenus sont avantageusement utilisés pour produire une image, qui est affichée sur un générateur d'images 20.

Il est à remarquer que, si le déplacement du faisceau radar obéit à une loi simple, telle qu'un déplacement parallèle à lui-même sur un trajet essentiellement transverse par rapport à sa direction autour d'une position stationnaire par rapport au sol, les traitements SAR peuvent être considérablement simplifiés.

Avantageusement, pour améliorer la détection et la localisation des objets au sol, chaque image complète d'informations vidéo venant de la sortie des moyens de traitement SAR est comparée, dans un corrélateur 18, avec une représentation de la zone observée contenue dans une mémoire 22. Cette corrélation permet de discriminer les objets utiles par rapport au bruit de fond produit par des éléments passifs de la zone observée.

Dans l'application de détection de véhicules automobiles sensiblement immobiles sur la voie d'une autoroute, la résolution du radar est de 2 mètres, avec une portée de l'ordre de 300 mètres (c'est-à-dire une résolution angulaire de l'ordre de 0,50).

Sur la figure 2, on a représenté un premier mode de réalisation des moyens permettant d'obtenir la loi de déplacement du faisceau radar.

Il s'agit d'une plate-forme 50 horizontale qui supporte l'ensemble 52 constitué par l'émetteur/récepteur radar et la double antenne constituée de l'antenne émissive 4 et de l'antenne réceptive 6, les deux antennes 4 et 6 étant solidaires et superposées l'une sur l'autre horizontalement. La plate-forme 50 est montée autour d'un mât 54 qui est perpendiculaire au sol et disposé selon une relation géométrique prédéterminée par rapport à la zone à observer ZD.

En pratique, la plate-forme est ici fixe.

En pratique, la longueur d'onde de travail est de l'ordre de 3 cm. Les dimensions de l'antenne physique sont choisies pour obtenir les caractéristiques techniques du radar décrites ci-avant.

Des moyens déplacent l'émetteur/récepteur radar ainsi que la double antenne en translation rectiligne horizontale par rapport au mât 54, selon une direction perpendiculaire 56 à la direction d'incidence DIR du faisceau rayonnant.

L'ensemble 52 constitué par l'émetteur/récepteur radar et la double antenne est monté sur un chariot (non représenté). Des moyens d'entraînement, tels qu'un moteur continu ou pas à pas entraînent le chariot sur un rail de guidage 60 ayant une excursion rectiligne en circuit fermé.

Par exemple, l'excursion rectiligne de la double antenne est de l'ordre de 2m à 2,20 m pour l'application sus visée. La vitesse de déplacement de l'ensemble 52 est de l'ordre de 2 m/s.

Il est à remarquer que la plate-forme peut être placée facilement près de la zone à observer.

Sur la figure 3, on a représenté en vue de dessus, un autre mode de réalisation des moyens permettant d'obtenir la loi de déplacement du faisceau radar.

Ces moyens comprennent une plate-forme horizontale et fixe supportant l'ensemble constitué par l'émetteur/récepteur radar et la double antenne. Comme en référence à la figure 2, la plate-forme est montée autour d'un mât.

L'antenne 4 et l'antenne 6 comprennent ici chacune une pluralité d'éléments rayonnants 100 agencés en au moins une rangée disposée horizontalement sur la plate-forme, les éléments rayonnants étant disposés pour rayonner selon la direction du faisceau radar DIR.

Avantageusement, la pluralité d'éléments rayonnants d'une antenne 4 ou 6 est agencée en deux rangées 102 et 104 pour rayonner dans les deux sens selon la direction d'incidence du faisceau radar DIR afin d'observer deux zones de part et d'autre du radar.

Sur la figure 3, seules deux rangées d'éléments rayonnants associées à l'antenne émissive 4 sont représentées pour faciliter la compréhension de l'invention. En ce qui concerne les éléments rayonnants (non représentés) de l'antenne réceptive 6, ils sont agencés en au moins une rangée inférieure ou supérieure disposée horizontalement sous ou sur la ou les rangées d'éléments rayonnants associés à l'antenne émissive.

Des moyens de commutation 101, à diodes par exemple, commutent l'excitation de sous-groupes d'éléments rayonnants de telle sorte que le centre de phase correspondant de la double antenne effectue un mouvement en translation linéaire horizontale par rapport au mât, selon une direction perpendiculaire à la direction d'incidence du faisceau rayonnant DIR. Les moyens de commutation à diodes sont accessibles à l'Homme du métier.

Par exemple, l'alimentation et la commutation des éléments rayonnants sont effectuées séquentiellement par paire d'éléments adjacents.

Avantageusement, la vitesse de déplacement du centre de phase de la double antenne est adaptée en fonction de la vitesse radiale de l'objet à détecter par rapport au radar.

Par exemple, dans l'application sus visée, la vitesse de déplacement du centre de phase est de l'ordre de 30 m/s. Il est à remarquer que dans ce mode de réalisation, le temps d'analyse est plus court que celui décrit en référence à la figure 2.

Sur la figure 4, on a représenté un autre mode de réalisation des moyens permettant de déplacer le faisceau radar.

Dans ce mode, la plate-forme 50 est montée à rotation autour du mât 54.

Un ensemble constitué par un moteur réducteur 110, une roue dentée 112 animée par ledit moteur 110 et une couronne dentée 114 disposée autour du mât 54 et coopérant avec ladite roue dentée 112 permet le déplacement de la plate-forme autour du mât à une vitesse choisie.

Typiquement, la vitesse angulaire est de 1 tour en 2 secondes.

Des moyens de compensation angulaire 116 asservissent le déplacement dudit ensemble radar 52 lors de la rotation de la plate-forme, de telle sorte que le faisceau radar se déplace parallèlement à lui-même et perpendiculairement à la zone à observer et éclaire en permanence celle-ci.

Par exemple, les moyens de compensation angulaire comprennent un mécanisme à chaîne propre à entraîner en translation l'ensemble radar 52 en fonction de la rotation de la plate-forme.

Des moyens mécaniques sont prévus pour changer de côté l'ensemble radar 52 lorsque celui-ci se trouve en bout de piste. Ces moyens mécaniques peuvent être animés par des cames ou un moteur pas à pas.

Avantageusement, le dispositif selon l'invention est complété par au moins deux antennes supplémentaires (non représentées) associées et solidaires de la double antenne 4, 6, ainsi que des moyens de traitement radar de type Doppler pour mesurer la vitesse des objets au sol.

En pratique, les moyens de commutations à diodes décrits en référence à la figure 3, peuvent être utilisés pour commuter les élément rayonnants des antennes supplémentaires.

La mesure Doppler peut ici servir à mesurer la vitesse des véhicules, en flux, file à file, etc.

Par ailleurs, des moyens d'alerte (non représentés) peuvent être associés au dispositif selon l'invention pour alerter automatiquement un centre de décision distant par exemple, en réponse à une détection et localisation de véhicules sensiblement immobiles dans la zone à observer.

Bien que le mât fixe soit estimé comme largement préférable, il est envisageable de le remplacer par un moyen restant stationnaire par rapport au sol, avec la précision voulue, et suffisamment près du sol.

La description ci-dessus est centrée sur une application de détection et de localisation de véhicules automobiles sensiblement immobiles dans une zone délimitée telle qu'une portion d'autoroute. Bien évidemment, le dispositif selon l'invention peut trouver d'autres applications dans lesquelles le déplacement du faisceau est engendré selon un déplacement parallèle à lui-même sur un trajet essentiellement transverse par rapport à sa direction autour d'une position stationnaire par rapport au sol.
En outre, le seuil de vitesse en deça duquel on considère des objets comme "sensiblement immobiles" peut dépendre de l'application.

## Revendications

1. Dispositif de détection et de localisation d'objets au sol dans une zone délimitée (ZD), comprenant un émetteur/récepteur radar (52) équipé d'au moins une antenne (4, 6) propre à engendrer un faisceau rayonnant déplacé parallèlement à lui-même sur un trajet essentiellement transverse par rapport à sa direction autour d'une position stationnaire par rapport au sol, et des moyens de traitement radar à ouverture synthétique (16) propres à traiter le signal de sortie du récepteur radar relatif au retour dudit faisceau sur ladite zone, en fonction du mouvement d'antenne, afin de détecter et de localiser les objets au sol dans ladite zone délimitée, caractérisé en ce qu'il comprend une plate-forme (50) horizontale propre à supporter l'ensemble constitué par l'émetteur/récepteur radar (52) et l'antenne, ladite plate-forme étant montée autour d'un mât (54) perpendiculaire au sol et disposé selon une relation géométrique prédéterminée par rapport à la zone délimitée (ZD), et en ce que l'antenne comprend une pluralité d'éléments rayonnants (100) agencés en au moins une rangée (102) disposée horizontalement sur la plate-forme (50), les éléments rayonnants étant disposés en sous-groupes pour rayonner selon la direction d'incidence du faisceau radar (DIR), et des moyens de commutation (101) propres à commuter l'excitation de chaque sous-groupe d'éléments rayonnants de telle sorte que le centre de phase de l'antenne est mobile en translation linéaire par rapport au mât, selon une direction perpendiculaire à la direction d'incidence du faisceau radar (DIR) et à une vitesse choisie.

2. Dispositif selon la revendication 1, caractérisé en ce que l'antenne est double, et constituée d'une antenne (4) émissive et d'une antenne (6) réceptive, les deux antennes étant solidaires et superposées l'une sur l'autre.

3. Dispositif selon la revendication 1, caractérisé en ce que la plate-forme (50) est fixe.

4. Dispositif selon l'une des précédentes revendications, caractérisé en ce que la résolution du radar est de 2 m, avec une portée de l'ordre de 300 m ce qui correspond à une résolution angulaire de 0,5°.

5. Dispositif selon l'une quelconque des précédentes revendications, caractérisé en ce que la longueur d'onde de travail est de l'ordre de 3 cm.

6. Dispositif selon l'une quelconque des précédentes revendications, caractérisé en ce qu'il comprend en outre des moyens de mémorisation (22) propres à stocker une représentation de la zone délimitée (ZD), et des moyens de traitement (18) propres à comparer la représentation ainsi stockée avec la représentation de la zone issue des moyens de traitement à ouverture synthétique en vue de détecter et de localiser les objets au sol.

7. Dispositif selon l'une quelconque des précédentes revendications, caractérisé en ce que la vitesse de déplacement du centre de phase de l'antenne est adaptée en fonction de la vitesse radiale de l'objet à détecter et à localiser par rapport audit dispositif.

8. Dispositif selon l'une quelconque des précédentes revendications, caractérisé en ce qu'il comprend en outre au moins deux antennes supplémentaires solidaires au moins en partie avec l'antenne (4, 6), et des moyens de traitement radar Doppler pour mesurer la vitesse des objets au sol.

9. Dispositif selon l'une quelconque des précédentes revendications, caractérisé en ce qu'il comprend en outre des moyens d'alerte et des moyens de commande propres à commander lesdits moyens d'alerte en réponse à une détection et localisation d'objets au sol.

## Patentansprüche

1. Vorrichtung zum Entdecken und Orten von Bodenzielen in einer begrenzten Zone (ZD), enthaltend einen Radarsender/Empfänger (52), der mit wenigstens einer Antenne (4,6) versehen ist, die in der Lage ist, ein Strahlenbündel hervorzubringen, das parallel zu sich selbst auf einer im wesentlichen quer zu seiner Richtung aus einer gegenüber dem Boden stationären Position verstellt wird, und Radarverarbeitungseinrichungen mit künstlicher Öffnung (16), die in der Lage sind, das Ausgangssignal des Radarempfängers in Bezug auf die Rückkehr des auf die Zone gerichteten Strahls in Abhängigkeit von der Bewegung der Antenne zu verarbeiten, um Bodenziele in der begrenzten Zone zu entdecken und zu orten, dadurch gekennzeichnet, daß sie eine horizontale Plattform (50) umfaßt, die in der Lage ist, die von dem Radarsender/Empfänger (52) und der Antenne gebildete Anordnung zu halten, wobei die Plattform an einem Mast (54) befestigt ist, der senkrecht zum Boden verläuft und in einer vorbestimmten geometrischen Beziehung gegenüber der begrenzten Zone (ZD) angeordnet ist, und daß die Antenne mehrere Strahlerelemente (100) aufweist, die in wenigstens einer Reihe (102) angeordnet sind, die horizontal auf der Plattform (50) verläuft, wobei die Strahlerelemente in Untergruppen angeordnet sind, um in der Einfallsrichtung des Radarstrahls (DIR) zu strahlen, und daß Umschalteinrichtungen (101) vorgesehen sind, die dazu eingerichtet sind, die Erregung jeder Untergruppe aus Strahlerelementen so umzuschalten, daß das Phasenzentrum der Antenne in linearer Querverschiebung gegenüber dem Mast in einer zur Einfallsrichtung des Radarstrahls (DIR) senkrechten Richtung und mit gewählter Geschwindigkeit beweglich ist.

2. Vorrichtung nach Anspruch 1, dadurch gekennzeichnet, daß die Antenne im Doppel realisiert ist und aus einer Sendeantenne (4) und einer Empfangsantenne (6) besteht, wobei die zwei Antennen fest miteinander verbunden und übereinander angeordnet sind.

3. Vorrichtung nach Anspruch 1, dadurch gekennzeichnet, daß die Plattform (50) fest ist.

4. Vorrichtung nach einem der vorhergehenden Ansprüche, dadurch gekennzeichnet, daß die Auflösung des Radars 2 m ist bei einer Reichweite in der Größenordnung von 300 m, was einer Winkelauflösung von 0,5° entspricht.

5. Vorrichtung nach einem der vorhergehenden Ansprüche, dadurch gekennzeichnet, daß die Arbeitswellenlänge in der Größenordnung von 3 cm liegt.

6. Vorrichtung nach einem der vorhergehenden Ansprüche, dadurch gekennzeichnet, daß sie weiterhin Speichereinrichtungen (22) aufweist, die in der Lage sind, eine Darstellung der begrenzten Zone (ZD) zu speichern, und daß Verarbeitungseinrichtungen (18) vorgesehen sind zum Vergleichen der so gespeicherten Darstellung mit der Darstellung der Zone, die von den Verarbeitungseinrichtungen mit künstlicher Öffnung abgegeben wird, um Bodenziele zu entdecken und zu orten.

7. Vorrichtung nach einem der vorhergehenden Ansprüche, dadurch gekennzeichnet, daß die Verstellgeschwindigkeit des Phasenzentrums der Antenne in Abhängigkeit von der Radialgeschwindigkeit des zu entdeckenden und zu ortenden Objekts gegenüber der Vorrichtung eingestellt ist.

8. Vorrichtung nach einem der vorhergehenden Ansprüche, dadurch gekennzeichnet, daß sie weiterhin wenigstens zwei zusätzliche Antennen aufweist, die wenigstens teilweise mit der Antenne (4, 6) verbunden sind, und Dopplerradarverarbeitungseinrichtungen zum Messen der Geschwindigkeit der Bodenziele aufweist.

9. Vorrichtung nach einem der vorhergehenden Ansprüche, dadurch gekennzeichnet, daß sie weiterhin Alarmeinrichtungen und Steuereinrichtungen zum Beeinflussen der Alarmeinrichtungen in Abhängigkeit von der Ermittlung und Ortung von Bodenzielen aufweist.

## Claims

1. Device for the detection and location of objects on the ground within a delimited zone (ZD), comprising a radar transmitter/receiver (52) equipped with at least one antenna (4, 6) suitable for generating a radiating beam displaced parallel to itself along a path essentially transverse to its direction about a position which is stationary in relation to the ground, and synthetic-aperture radar processing means (16) suitable for processing the output signal from the radar receiver in relation to the return of said beam to said zone, as a function of the antenna movement, in order to detect and locate the objects on the ground within said delimited zone, characterized in that it comprises a horizontal platform (50) suitable for supporting the assembly consisting of the radar transmitter/receiver (52) and of the antenna, said platform being mounted about a mast (54) perpendicular to the ground and arranged according to a predetermined geometric relation with respect to the delimited zone (ZD), and in that the antenna comprises a plurality of radiating elements (100) organized in at least one row (102) arranged horizontally on the platform (50), the radiating elements being arranged in subgroups so as to radiate in the direction of incidence of the radar beam (DIR), and switching means (101) suitable for switching the excitation of each subgroup of radiating elements in such a way that the phase centre of the antenna is moveable in linear translational motion with respect to the mast, in a direction perpendicular to the direction of incidence of the radar beam (DIR) and at a selected speed.

2. Device according to Claim 1, characterized in that the antenna is double and consists of a transmitting antenna (4) and of a receiving antenna (6), the two antennas being integral with one another and being superposed one on the other.

3. Device according to Claim 1, characterized in that the platform (50) is fixed.

4. Device according to one of the preceding claims, characterized in that the resolution of the radar is 2 m, with a range of the order of 300 m, corresponding to an angular resolution of 0.5°.

5. Device according to any one of the preceding claims, characterized in that the working wavelength is of the order of 3 cm.

6. Device according to any one of the preceding claims, characterized in that it comprises, furthermore, storage means (22) suitable for storing a representation of the delimited zone (ZD), and processing means (18) suitable for comparing the representation thus stored with the representation of the zone obtained from the synthetic-aperture processing means, for the purpose of detecting and locating the objects on the ground.

7. Device according to any one of the preceding claims, characterized in that the displacement speed of the phase centre of the antenna is adjusted as a function of the radial speed of the object to be detected and located with respect to said device.

8. Device according to any one of the preceding claims, characterized in that it comprises, furthermore, at least two additional antennas integral at least partially with the antenna (4, 6), and Doppler radar processing means for measuring the speed of the objects on the ground.

9. Device according to any one of the preceding claims, characterized in that it comprises, furthermore, alerting means and control means suitable for controlling said alerting means in response to a detection and location of objects on the ground.
